# NOUVEAU FASCICULE DE BREVET EUROPEEN

(11) **EP 1 663 438 B2**
(45) Date de publication et mention de la décision concernant l'opposition: **14.01.2015**
(45) Mention de la délivrance du brevet: 19.01.2011
(21) Numéro de dépôt: 04786314.7
(22) Date de dépôt: 16.08.2004
(51) Int. Cl.: B01D 21/00, B01D 21/02

(54) **MODULE DE DECANTATION LAMELLAIRE A PLAQUES VERTICALES**
LAMELLENDEKANTIERMODUL MIT VERTIKALEN PLATTEN
LAMELLAR DECANTING MODULE WITH VERTICAL PLATES

(30) Priorité: 19.08.2003 FR 0310019
(43) Date de publication de la demande: 07.06.2006
(73) Titulaire: Veolia Water Solutions & Technologies Support, 94410 Saint-Maurice (FR)
(72) Inventeur: URSEL, Valéry, F-93320 Les Pavillons Sous Bois (FR)
(74) Mandataire: Santarelli
(86) Numéro de dépôt international: PCT/FR2004/002147
(87) Numéro de publication internationale: WO 2005/018774

(56) Documents cités:
- EP-A- 0 423 964
- FR-A- 2 348 156
- JP-U- H0 332 905
- JP-U- S55 133 204
- US-A- 3 399 135
- US-A- 4 933 524
- US-A- 5 736 037
- US-B1- 6 171 483

## Description

### I - Domaine technique

L'invention concerne un système de lamelles destinées à séparer par décantation des particules solides en suspension dans un liquide tel que des eaux, notamment bien adapté au traitement de clarification d'eaux usées, de potabilisation d'eaux de surface ou à la production d'eaux de processus industriels.

### II - Terminologie

Dans la suite, diverses notions seront utilisées avec les significations suivantes :
- Plaque de décantation ou lamelle = surface plane ou ondulée installée dans une cuve appelée décanteur lamellaire afin d'assurer la récupération des particules détachées du fluide principal,
- Tube de décantation = conduit de forme essentiellement polygonale, généralement formé par la juxtaposition de 2 plaques dont l'une au moins est ondulée, et disposé à un certain angle par rapport au plan horizontal pour assurer la séparation liquide-solide,
- Module = groupement de 2 plaques disposées en sorte de constituer des tubes de décantation,
- Bloc = groupement de plusieurs modules assemblés en sorte de faciliter les opérations de mise en oeuvre,
- Zone de transition = première partie du tube de décantation dans laquelle s'effectue la transition entre l'écoulement turbulent et celui laminaire,
- Longueur utile = partie du tube de décantation située en aval de la zone de transition, dans laquelle a lieu la séparation de phase grâce à un régime d'écoulement laminaire.

### III - Etat de l'art antérieur

Les décanteurs lamellaires actuels mettent en oeuvre l'un ou l'autre des trois principes d'écoulement suivants :
- à contre-courant : les particules décantées suivent un mouvement descendant, tandis que le liquide en cours de traitement suit un mouvement ascensionnel,
- à courants croisés : le liquide suit un mouvement horizontal tandis que les particules suivent un mouvement descendant
- à co-courant : le liquide et les particules séparées suivant la même direction de courant, généralement descendante.

L'invention vise tout particulièrement la première catégorie, à savoir celle de la décantation à contre-courant, qui est la plus répandue dans le domaine industriel.

La plupart des systèmes actuels (dits souvent « en nid d'abeilles ») sont fondés sur la mise en oeuvre de tubes de séparation, le plus souvent polygonaux, orientés avec un angle compris entre 45° et 65° par rapport au plan horizontal.

En pratique, les plaques utilisées comportent un gaufrage, habituellement de forme trapézoïdale, disposé parallèlement au bord vertical de ces plaques, et l'inclinaison des tubes ainsi formés est déterminée par celle avec laquelle ces plaques sont montées par rapport au plan horizontal, c'est à dire selon un angle compris entre 45° et 65.

A l'intérieur des tubes, de forme hexagonale lorsque le gaufrage est trapézoïdal, les boues décantées s'écoulent sur le plan incliné formé par le côté inférieur de l'hexagone (donc un petit côté de la forme trapézoïdale), avec une vitesse freinée par le frottement résultant de l'importance de la surface de contact existant entre boues et lamelles du fait de cette section trapézoïdale..

Par ailleurs, les plaques ainsi disposées présentent un risque de flambage et de déformation plastique lorsque le poids du dépôt devient excessif, ce qui nécessite en pratique la présence de raidissements spécifiques ou d'un sur-épaississement des plaques.

Les décanteurs lamellaires sont ainsi, dans l'état de l'art actuel, en pratique constitués par un empilement de plaques parallèles (dans le sens de la longueur du décanteur) mais décalées les unes par rapport aux autres pour tenir compte de leur inclinaison, et la formation d'un ensemble de grande longueur nécessite la manutention, le positionnement relatif et l'empilement d'un grand nombre de plaques inclinées. L'assemblage des plaques en modules et des modules en blocs facilite la mise en oeuvre de ces plaques, par la réalisation à l'extérieur du décanteur d'une partie des opérations de montage; mais il subsiste des opérations à réaliser dans le décanteur, ce qui augmente sensiblement le coût et demande une durée difficilement compressible.

Par ailleurs, les blocs, qui ont la forme de parallélogrammes non rectangles, avec des faces latérales inclinées constituées des plaques avant et arrière, sont difficilement manipulables et peu adaptés à équiper des ouvrages de forme non rectangulaire.

Un autre type de bloc lamellaire disponible dans le commerce est de forme parallélépipédique, étant constitué à partir de plaques verticales portant des gaufrages inclinés par rapport aux cotés de ces plaques ; de tels blocs sont utilisés couramment comme garnissage ordonné pour augmenter la surface de contact dans des contacteurs gaz-liquide ou liquide-liquide. Mais dans ce type d'utilisation, les plaques successives sont disposées de manière à croiser les gaufrages, afin d'augmenter l'effet de mélange par croisement des courants, de sorte qu'il n'y a pas de véritable tubes.

Une variante est décrite dans le document US - A - 5,384,178, qui décrit un ensemble de décantation formé de modules de deux plaques verticales formant conjointement des tubes inclinés. Plus précisément, chaque module est formé de l'assemblage de deux plaques de géométries différentes, dont la première est ondulée et l'autre sensiblement plane, de sorte que les tubes ont des sections trapézoïdales, presque triangulaires. Plus précisément, la seconde plaque présente des rainures concaves venant coiffer les crêtes de l'autre plaque, ce qui permet un bon positionnement relatif, mais implique que la seconde plaque pénètre dans les portions concaves des ondulations de la première plaque. Ces modules peuvent être empilés, formant ainsi un réseau de tubes sensiblement triangulaires. Mais, en raison de ce que les plaques ont des ondulations de même sens mais d'amplitudes différentes, les tubes obtenus par l'empilement de deux modules sont plus petits que ceux ménagés au sein de chacun de ces modules. Les ondulations ne sont pas rectilignes, en ce sens que les tubes sont, en leurs extrémités, coudés pour devenir verticaux, et que, de plus, les parois des tubes présentent des ondulations le long de leur axe longitudinal. Il en résulte que ce système implique des plaques d'au moins deux géométries différentes, chacune d'entre elles étant complexe, et que les tubes obtenus ont des sections différentes et variables. Il en découle des inconvénients non seulement pour la fabrication (temps et coût liés à l'obligation de prévoir deux types de fabrication), mais aussi pour l'entretien (notamment pour le nettoyage des tubes, ondulés, coudés et non identiques).

Il peut en outre être noté que cette configuration à tubes globalement triangulaires est plus compacte, et donc plus lourde que celle des blocs connus à tubes hexagonaux.

Un inconvénient commue aux divers systèmes existants est qu'ils nécessitent en pratique la vidange des ouvrages, aussi bien pour les opérations d'installation des blocs que pour leur enlèvement.

### IV - Problème technique et solution de l'invention

L'invention a pour objet de pallier les inconvénients précités, en proposant un module (de deux plaques) et un système de décantation lamellaire (à au moins un bloc de plaques) qui combinent au moins certains des avantages suivants :
- décantation dans des tubes plutôt qu'entre des plaques distantes, pour améliorer l'efficacité de décantation,
- utilisation d'une forme de tubes minimisant la surface de lamelles en contact avec l'écoulement de boues décantées, en sorte de diminuer le frottement boues-lamelles, augmenter la vitesse d'écoulement des boues, minimiser la section nécessaire pour laisser passer l'écoulement de boues, et ainsi augmenter la section disponible pour le passage de l'eau,
- disposition verticale des modules dont les ondulations sont inclinées afin d'améliorer leur tenue mécanique et/ou permettre la diminution de l'épaisseur des plaques,
- minimisation du nombre de composants différents à prévoir,
- minimisation du nombre de plaques à assembler pour la constitution d'un module de largeur donnée mais de grande longueur,
- diminution des coûts de mise en oeuvre.

L'invention propose à cet effet, un système de décantation lamellaire comportant au moins un bloc parallélépipédique rectangle formé de plusieurs plaques verticales et rectangulaires fixées les unes aux autres en s'étendant perpendiculairement à l'une des faces de ce bloc, dont au moins deux plaques adjacentes identiques l'une à l'autre qui comportent chacune des ondulations dont les crêtes et les vallées sont inclinées d'un angle (α) non nul par rapport à un bord horizontal, ces deux plaques adjacentes ayant un même profil ondulé en sorte de délimiter conjointement des tubes de décantation inclinés rectilignes sur toute leur longueur, en étant fixées l'une à l'autre en des zones de liaison définissant un plan vis-à-vis duquel les deux plaques sont symétriques l'une de l'autre et qui est un plan de symétrie (P) pour ces tubes définis par ces plaques, l'une de ces plaques définissant avec une autre plaque adjacente identique d'autres tubes rectilignes de même inclinaison, les tubes ayant un diamètre hydraulique compris entre 40 et 100 mm et une longueur comprise entre 15 et 30 fois leur diamètre hydraulique.

L'identité des profils ondulés des deux plaques permet que celles-ci soient obtenues par le même processus de fabrication ; et leur montage symétrique permet l'obtention de tubes d'une manière particulièrement simple.

Les crêtes et les vallées ont de préférence une forme trapézoïdale, de sorte que les tubes de décantation ont une forme hexagonale, ce qui correspond à une structure à la fois peu compacte et robuste.

Pour faciliter le positionnement des plaques au moment du montage du module, celles-ci sont préparées en sorte d'être symétriques l'une de l'autre dans leur ensemble (donc identiques), de sorte qu'une superposition des bords de ces plaques, à une rotation près, garantit le bon positionnement des vallées (ou des crêtes).

Ces plaques ont, pour des raisons évidentes de simplicité de fabrication et de manutention, une forme rectangulaire.

De même, pour des raisons similaires de simplicité, les tubes sont rectilignes, sans coude en leurs extrémités.

L'inclinaison des tubes par rapport audit premier bord est avantageusement comprise dans la plage 45°-65°, de préférence 55°-60°, ce qui est apparu conduire à de très bonnes performances de décantation, lorsque les plaques sont disposées verticalement dans des eaux à traiter, avec le premier bord disposé horizontalement.

Le fait que le système de décantation lamellaire comporte au moins un bloc formé de plusieurs plaques, dont au moins une paire constitue un module du type défini ci-dessus, lui apporte une bonne rigidité.

Un tel bloc peut comporter un nombre impair de plaques, mais il comporte avantageusement une pluralité de modules, dont au moins deux modules assemblés d'une manière telle que ces modules délimitent conjointement d'autres tubes, ces modules étant fixés l'un à l'autre en des zones définissant un plan de symétrie pour ces autres tubes.

Ces autres tubes ont avantageusement la même section que les tubes des modules, auquel cas le bloc constitue un réseau de tubes identiques, qui présente donc des performances sensiblement homogènes en tout point du bloc.

Pour des raisons évidentes de simplicité de fabrication, les modules sont avantageusement identiques, ce qui permet notamment que le bloc ait une forme parallélépipédique rectangle, les plaques étant perpendiculaires à l'une des faces de ce bloc. Les plaques s'étendent de préférence perpendiculairement à la plus petite dimension du bloc, ce qui veut dire, en d'autres termes que les plaques s'étendent selon les deux plus grandes dimensions du bloc, ce qui est favorable à une bonne tenue mécanique de l'ensemble. Une telle forme généralement parallélépipédique rectangle rend le bloc facile à manipuler mais aussi à loger dans une cuve de décantation.

Comme cela a déjà été évoqué ci-dessus, le bloc est avantageusement disposé au sein du système de telle sorte que les plaques sont verticales, avec le premier bord s'étendant horizontalement ; cela permet notamment que le bloc puisse être suspendu à une partie fixe du système, sans qu'il y ait à craindre une déformation du bloc du fait de la gravité.

Dans cette configuration, il peut être noté que la décantation se fait le long d'une portion localement triangulaire (en une zone de jonction entre les deux plaques), ce qui est favorable à une évacuation rapide des boues décantées.

Les blocs sont constitués par le groupement d'un certain nombre de modules, chaque bloc pouvant être muni de crochets ou anneaux afin de faciliter leur manutention. L'assemblage des modules afin de constituer un bloc peut être effectué par agrafage, collage, soudage thermique ou ultrasons.

Les blocs peuvent être installés aussi à l'intérieur de cadres métalliques ou non, le cadre pouvant servir aussi bien au transport qu'à la manutention. Avantageusement, le cadre peut être démontable afin de permettre un remplacement aisé des lamelles, selon les besoins du traitement.

La disposition des blocs dans le prolongement l'un de l'autre nécessite le respect de la même orientation des tubes de décantation afin d'assurer que les tubes d'extrémité d'un des blocs soient dans le prolongement des tubes correspondants de l'autre bloc ; on obtient ainsi des tubes en deux tronçons qui ont finalement la- même longueur que les tubes entièrement contenus dans chaque bloc.

On a donc une structure modulaire permettant de s'adapter facilement à la disposition particulière de la cuve qui doit comporter le système de décantation lamellaire, cette cuve pouvant être de toute forme et de toute taille, y compris de forme circulaire. Ceci permet la constitution d'ensembles de grande taille, en disposant les blocs dans les ouvrages de traitement sur des supports prévus à cet effet ou suspendus à des structures existantes, par manutention mécanique uniquement.

Lorsque le bloc est confronté à une paroi de cuve à laquelle les plaques sont perpendiculaires, ce bloc est avantageusement disposé à distance de cette paroi en sorte de laisser subsister un espace entre les lamelles et les parois, afin d'assurer l'alimentation et le drainage des tubes de décantation de ce bloc qui sont incomplets.

Les tubes ont un diamètre hydraulique compris entre 40 et 100 mm, et les tubes ont une longueur comprise entre 15 et 30 fois leur diamètre hydraulique, ce qui assure de bonnes performances de décantation.

Il peut être noté que, par rapport aux blocs du document US - A - 5,384,178, les modules et blocs de l'invention conduisent à une plus grande légèreté, pour un volume donné, sans nuire à la tenue mécanique de l'ensemble, avec des tubes de section plus importante, donc avec moins de risques de bouchage, puisqu'il n'y a pas de plaques approximativement plane entre des plaques présentant des ondulations importantes. La disposition de l'invention permet la mise en oeuvre, pour un travail de décantation donné, d'une surface de plaques largement inférieure à celle proposée par le document précité, les plaques planes ne jouant pas de rôle dans la décantation proprement dite.

La disposition en parallèle des ondulations (ou gaufrages), contrairement à des garnissages ordonnés croisés, minimise les turbulences et évite la constitution des carrefours de mélange.

Les présents blocs facilitent sensiblement la mise en oeuvre et peuvent même être installés dans un appareil sans le vider- ou arrêter son fonctionnement.

### V - Description détaillée d'exemples de réalisation de l'invention

Des objets, caractéristiques et avantages de l'invention ressortent de la description qui suit, donnée à titre d'exemple illustratif non limitatif en regard des dessins annexés sur lesquels :
- la figure 1 est une vue en perspective d'un module de décantation lamellaire,
- la figure 2 est un bloc de décantation lamellaire conforme à l'invention,
- la figure 3 est une vue partielle de dessus de ce bloc,
- la figure 4 est une vue de détail d'un tube de décantation en coupe verticale, en configuration de service,
- la figure 5 est un schéma de principe d'un bloc tel que celui des figures 2 et 3, muni d'éléments d'accrochage,
- la figure 6 est une vue de dessus montrant un ensemble de blocs, complets ou incomplets, occupant un espace rectangulaire prédéterminé,
- la figure 7 est un schéma de principe montrant la coopération de deux blocs situés dans le prolongement l'un de l'autre, au sein du système de la figure 6,
- la figure 8 est un schéma de principe d'une installation comportant un système de décantation posé sur supports,
- la figure 9 est un schéma de principe d'une autre installation comportant un système de décantation intégré dans une cuve à boues activées de type chenal,
- la figure 10 est un schéma de principe d'une autre installation comportant une série de blocs de décantation, disposés contre une paroi courbe,
- la figure 11 est une coupe verticale de cette installation, et
- la figure 12 est un schéma de principe d'une autre installation, suspendu.

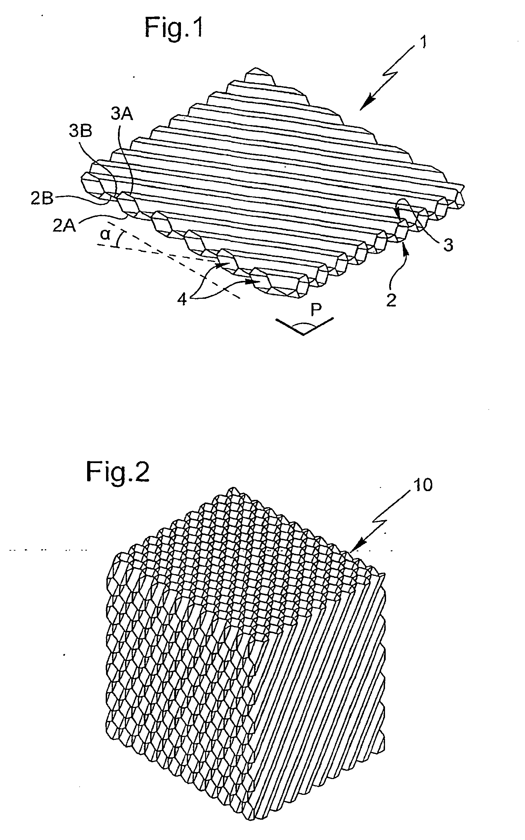

La figure 1 représente un module de décantation selon l'invention.

Ce module, désigné sous la référence générale 1, comporte deux plaques 2 et 3 fixées l'une à l'autre, par exemple par collage.

Ces deux plaques comportent des ondulations dont les crêtes 2A ou 3A et les vallées 2B ou 3B sont inclinées par rapport à un premier bord de ces plaques selon un angle α non nul ; ces vallées sont fixées en regard les unes des autres, tandis que les crêtes des deux plaques délimitent des tubes de décantation inclinés 4.

Ces deux plaques ont le même profil et sont fixées en leurs vallées en des zones qui définissent un plan fictif P qui est un plan de symétrie pour les tubes définis par ces plaques. Ces plaques sont identiques, en ce sens, notamment, que leurs bords sont en regard ; elles sont symétriques l'une de l'autre par rapport du plan P. Leur forme est rectangulaire, ce qui est une forme particulièrement simple.

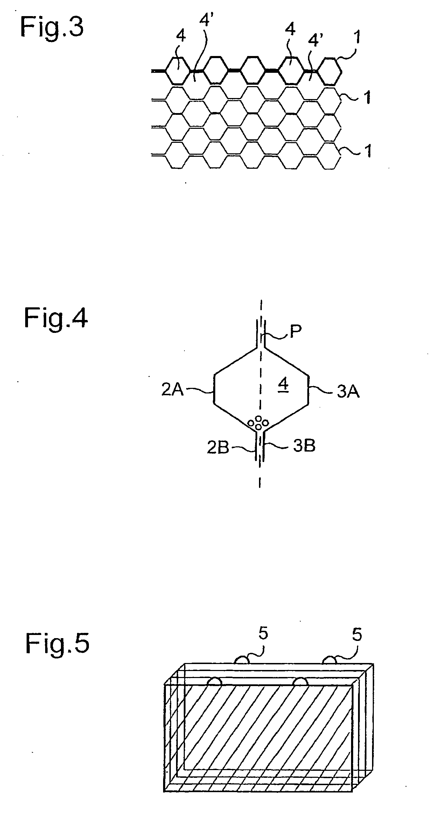

Ainsi que cela est représenté à la figure 2, plusieurs plaques peuvent être assemblées en sorte de former un bloc 10, ici globalement parallélépipédique rectangle, avec un réseau de tubes hexagonaux identiques. Le bloc de la figure 3 peut avantageusement s'analyser comme étant formé de quatre modules 1 tels que celui de la figure 1, mais le nombre de modules par bloc peut bien sûr être différent. Les vallées des plaques forment des tubes 4', ici similaires à ceux formés au sein de chaque module.

En effet, les crêtes et les vallées ont ici été choisies avec un même profil, de sorte que les tubes formés conjointement par les crêtes de deux plaques montées face-à-face sont identiques aux tubes formés conjointement par les vallées de ces plaques avec les vallées de chacune des plaques qui leur font face.

Le système de décantation lamellaire précité est fondé sur le principe de la décantation en V, en utilisant un des coins du tube incliné 4 de section hexagonale. Le principal avantage par rapport à la disposition classique où la décantation à lieu sur un des côtés de l'hexagone, est de posséder une surface de frottement plus faible entre boues et parois, ce qui conduit à une diminution des forces de frottement qui freinent normalement la descente de la boue dans le tube et donc à une augmentation de la vitesse d'écoulement. Cela a pour conséquence que, pour évacuer un même volume de boues, l'épaisseur de couche est plus faible, entraînant une augmentation de la section disponible pour l'écoulement de l'eau, donc à une vitesse ascendante plus faible et donc une meilleure efficacité de séparation.

Cela ressort particulièrement bien de la figure 4.

La structure tubulaire des présents blocs comparés aux plaques planes, se caractérise par un diamètre hydraulique supérieur, un nombre de Reynolds plus faible ainsi qu'une longueur réduite pour l'établissement de l'écoulement laminaire (NB : ces notions sont bien connues de l'homme de métier, le diamètre étant par exemple le quadruple du rayon hydraulique, lequel est le rapport de la section mouillée (section occupée par l'écoulement) au périmètre mouillé ; ces notions sont par exemple définies dans le Manuel d'Hydraulique Générale de Armando Lencaster, aux Editions Eyrolles, 1986, p.50). Cela a pour conséquence une longueur efficace plus importante que pour un décanteur à plaques planes, donc une efficacité de séparation supérieure à longueur totale et écartement identiques.

Le tableau suivant permet une comparaison entre un bloc selon l'invention et un système à plaques planes :

| | | | Dispositif selon l'invention | Plaques planes |
|---|---|---|---|---|
| Largeur bloc | mm | L | 1020 | 1020 |
| Largeur tube | mm | L1 | 60 | 1020 |
| Nombre de tubes en | | | | |
| parallèle | - | N=L/L1 | 17 | 1 |
| Ecartement moyenne tube | mm | E | 30 | 30 |
| Périmètre mouillé | mm | P1 | 166 | 2040 |
| Surface intérieure tube | | mm2 S1=L*E | 1800 | 30600 |
| Surface intérieure totale | mm2 | S=S1*N | 30600 | 30600 |
| Diamètre hydraulique | mm | Dh=4*S1/P1 | 43 | 60 |
| Viscosité cinématique | m/s2 | n | 1.15E-06 | 1.15E-06 |
| Vitesse de circulation | m/h | V | 10 | 10 |
| Nombre de Reynolds | - | Re=V*Dh/n | 105 | 145 |
| Longueur de transition | mm | Lt=0.02875*Dh*Re | 131 | 250 |
| Longueur totale | mm | Lmax | 1100 | 1100 |
| Longueur utile/totale | | (Lmax-Lt)/Lmax | 88% | 77% |

L'écartement des tubes, c'est-à-dire leur diamètre hydraulique, pourra être choisi en fonction de la quantité de boues à extraire et de la concentration désirée en sortie. L'écartement sera de préférence plus important pour les eaux fortement chargées qui comportent un risque important de bouchage, et, inversement, plus faible lorsque l'on cherche à accroître l'efficacité de traitement.

C'est ainsi que le diamètre hydraulique est choisi entre 40 et 100 mm, de façon préférentielle entre 40 mm environ pour des eaux peu chargées, à 80 mm environ pour des eaux chargées.

Plusieurs remarques peuvent être faites à propos des blocs (dont certaines ont déjà été évoquées ci-dessus), étant rappelé qu'il s'agit de caractéristiques préférées, mais non impératives.

Les plaques de décantation de forme rectangulaire sont de préférence munis de canaux ou gaufrages, par exemple formés par thermo-formation ; ce terme de "gaufrage" peut paraître plus approprié que celui d'ondulation lorsque la section des vallées ou des crêtes est polygonale. Ces gaufrages forment avantageusement un angle par rapport à la base compris entre 45 à 65°, de préférence entre 55° et 60°. La hauteur des plaques est typiquement comprise entre 500 mm et 3 000 mm, préférentiellement entre 900 mm et 1 300 mm.

Les canaux thermo-formés sont préférentiellement de forme trapézoïdale afin de créer des formes fermées hexagonales lors de la constitution des modules.

Chaque module est constitué de deux plaques parallèles, disposées en miroir par rapport à leur plan de contact.

Chaque bloc est constitué d'un nombre prédéfini de modules disposés en parallèle (même si en variante il pourrait y avoir un nombre impair de plaques identiques, montées successivement en tête-bêche). La largeur B de chaque bloc dépend du nombre de modules associés et tient compte de la largeur de l'ouvrage à équiper, voire du mode de colisage prévu pour le transport.

Les blocs sont de forme parallélépipédique afin de faciliter l'installation dans toutes dimensions et formes d'ouvrage ; le dernier bloc d'une rangée peut être raccourci en tenant compte de la longueur de l'ouvrage à équiper.

Chaque bloc peut être muni de crochets 5 (cf figure 5), par exemple au nombre de quatre, afin de faciliter la manutention (pose et dépose) lors de l'installation initiale ou pour lavage ou remplacement. Ces crochets sont ici disposés le long des bords supérieurs des deux plaques extrêmes du bloc. On peut noter ici que les plaques s'étendent selon la dimension la plus grande du bloc, et que la largeur de ce bloc (la profondeur sur cette figure 5) est perpendiculaire aux plaques.

Le nombre de blocs à disposer en parallèle ainsi que leur largeur sont définis en fonction de la largeur de la cuve de décantation.

Plusieurs blocs peuvent être juxtaposés dans le sens longitudinal, en fonction de la longueur totale de la cuve et de la longueur de chaque bloc.

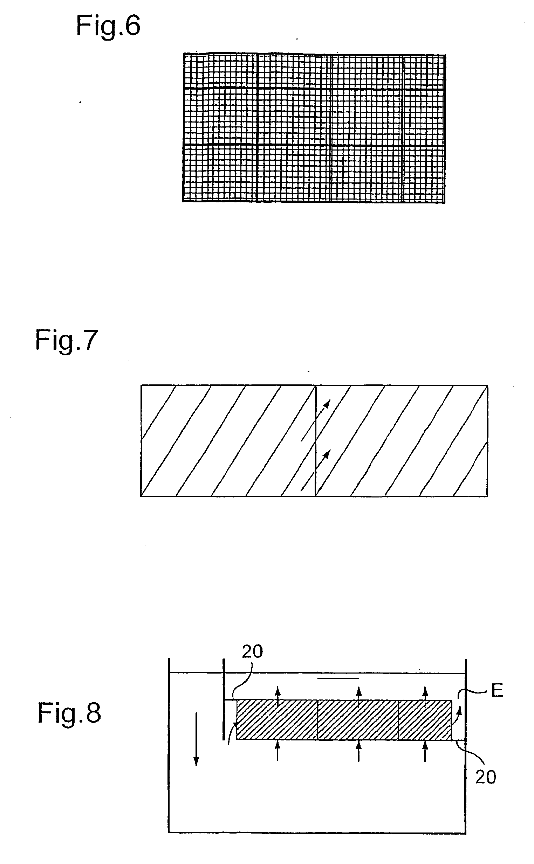

La figure 6 montre un agencement de 12 modules, dont 2x3 modules complets (de dimensions LxB), trois modules de largeur réduite (longueur L mais largeur B1), trois modules de longueur réduite (longueur L1 avec largeur B) et un module réduit sur deux dimensions (longueur L1 et largeur B1). On peut noter que les blocs sont contigus, et qu'en conséquence les tubes de ces blocs se prolongent les uns les autres (voir figure 7).

En effet, le découpage latéral de chaque plaque est avantageusement effectué systématiquement au même point par rapport au profil trapézoïdal afin d'assurer une parfaite continuité entre deux blocs disposés longitudinalement. La continuité d'écoulement dans les tubes de décantation appartenant aux deux blocs successifs est ainsi assurée en évitant leur bouchage éventuel par les boues déposées et non évacuées, ce qui est schématisé par les deux flèches de la figure 7 qui traversent l'interface entre les deux blocs adjacents.

Ainsi que cela ressort notamment de la figure 8, dans un décanteur rectangulaire, des espaces de circulation verticaux E peuvent être avantageusement aménagés entre le dernier bloc et la paroi de la cuve afin d'assurer l'utilisation de tous les tubes de décantation et évitant ainsi la formation des dépôts dans les tubes. On peut noter que ce décanteur rectangulaire est simplement posé sur des supports 20.

Dans un décanteur rectangulaire tel que celui de la figure 8, des plaques horizontales (ici représentées sous les mêmes références que les supports 20) sont disposées en haut ou en bas de chaque couloir vertical afin de séparer l'eau brute de l'eau décantée.

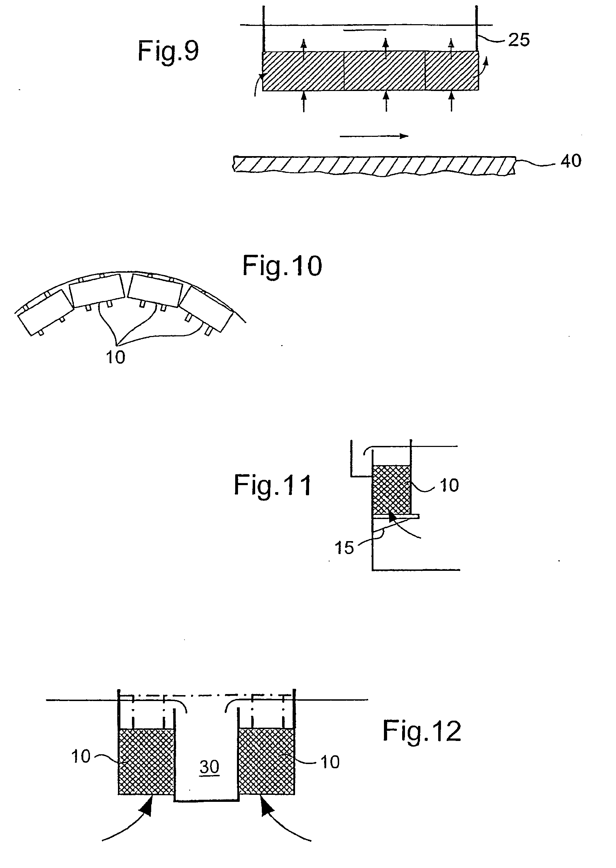

La figure 9 représente un décanteur rectangulaire monté dans un chenal de boues activées, ici suspendu (par exemple au moyen des crochets 5 de la figure 5) à une structure fixe 25 surplombant le niveau d'eau mais pouvant, en variante, être posé. Un radior est représenté sous la référence 40.

La figure 10 représente un décanteur circulaire, équipé d'une succession de blocs 10 montés près de la paroi, devant le déversoir de sortie (non représenté); ainsi que cela apparaît à la figure 11, chaque bloc est par exemple posé sur des supports 15.

Et la figure 12 représente en coupe un décanteur comportant deux blocs de chaque côté d'un canal de reprise rectiligne 30 (dans une configuration ici suspendue).

## Revendications

1. Système de décantation lamellaire comportant au moins un bloc (10) parallélépipédique rectangle formé de plusieurs plaques verticales et rectangulaires fixées les unes aux autres en s'étendant perpendiculairement à l'une des faces de ce bloc, dont au moins deux plaques adjacentes (2, 3) identiques l'une à l'autre qui comportent chacune des ondulations dont les crêtes (2A, 3A) et les vallées (2B, 3B) sont inclinées d'un angle (α) non nul par rapport à un bord horizontal, ces deux plaques adjacentes ayant un même profil ondulé en sorte de délimiter conjointement des tubes de décantation (4, 4') inclinés rectilignes sur toute leur longueur, en étant fixées l'une à l'autre en des zones de liaison définissant un plan vis-à-vis duquel les deux plaques sont symétriques l'une de l'autre et qui est un plan de symétrie (P) pour ces tubes (4) définis par ces plaques, l'une de ces plaques définissant avec une autre plaque adjacente identique d'autres tubes (4') rectilignes de même inclinaison, les tubes ayant un diamètre hydraulique compris entre 40 et 100 mm et une longueur comprise entre 15 et 30 fois leur diamètre hydraulique.

2. Système selon la revendication 1, **caractérisé en ce que** les plaques s'étendent perpendiculairement à la plus petite dimension du bloc.

3. Système selon la revendication 1 ou la revendication 2, **caractérisée en ce que** les profils ondulés de ces plaques adjacentes sont tels qu'ils permettent une décantation la long d'une portion localement triangulaire.

4. Système selon l'une quelconque des revendications 1 à 3, **caractérisé en ce que** les crêtes (2A, 3A) et les vallées (2B, 3B) ont une forme trapézoïdale, de telle sorte que les tubes de décantation ont une forme hexagonale.

5. Système selon l'une quelconque des revendications 1 à 4, **caractérisé en ce que** l'angle d'inclinaison (α) est compris dans la plage 45°-65°.

6. Système selon la revendication 5, **caractérisé en ce que** l'angle d'inclinaison est compris dans la plage 55°-60°.

7. Système selon l'une quelconque des revendications 1 à 6, **caractérisé en ce que** les crêtes et les vallées ont des profils identiques, de sorte que les tubes formés par ladite plaque avec chacune desdites plaques adjacentes ont la même section.

8. Système selon l'une quelconque des revendications 1 à 7, **caractérisé en ce qu'**il est formé de plaques identiques telles que chaque plaque définit avec une plaque adjacente une paire de plaques adjacentes qui comportent chacune des ondulations dont les crêtes et les vallées sont inclinées dudit angle non nul par rapport audit bord horizontal, ces deux plaques adjacentes ayant un même profil ondulé en sorte de délimiter conjointement des tubes de décantation inclinés rectilignes sur toute leur longueur, en étant fixées l'une à l'autre en des zones de liaison définissant un plan de symétrie (P) pour ces tubes (4, 4') définis par ces plaques.

9. Système selon la revendication 8, **caractérisé en ce que** tous ces tubes (4') ont la même section.

10. Système selon l'une quelconque des revendications 1 à 9, **caractérisé en ce que** ce bloc est muni d'éléments d'accrochage au moyen desquels ce bloc peut être manutentionné.

11. Système selon la revendication 10, **caractérisé en ce que** le bloc est suspendu à une partie fixe du système,

12. Système selon l'une quelconque des revendications 1 à 9, **caractérisé en ce que** le bloc est posé sur une partie fixe du système

13. Système selon l'une quelconque des revendications 1 à 12, **caractérisé en ce qu'**il comporte au moins deux blocs juxtaposés et identiques, d'une manière telle que des tubes de l'un des blocs soient dans le prolongement de tubes de l'autre des blocs.

14. Système selon l'une quelconque des revendications 1 à 13, **caractérisé en ce que** le bloc est disposé auprès d'une paroi de cuve à laquelle les plaques sont perpendiculaires, en laissant subsister un espace entre ce bloc et cette paroi.

## Patentansprüche

1. System zum lamellenartigen Dekantieren, das wenigstens einen parallelepipedförmigen, rechtwinkligen Block (10) umfasst, der aus mehreren vertikalen und rechtwinkligen aneinander befestigten Platten gebildet ist, indem sie sich senkrecht zu einer der Flächen des Blocks erstrecken, wobei wenigstens zwei benachbarte Platten (2, 3), die einander gleich sind, jeweils Welligkeiten aufweisen, deren Spitzen (2A, 3A) und Täler (2B, 3B) in Bezug auf einen horizontalen Rand unter einem von null verschiedenen Winkel α geneigt sind, wobei diese zwei benachbarten Platten das gleiche Welligkeitsprofil haben, derart, dass sie gemeinsam geradlinige und geneigte Dekantierungsrohre (4, 4') auf ihrer gesamten Länge begrenzen, indem sie aneinander in Verbindungszonen befestigt sind, die eine Ebene definieren, in Bezug auf die die zwei Platten zueinander symmetrisch sind und die eine Symmetrieebene (P) für die durch diese Platten definierten Rohre (4) ist, wobei eine dieser Platten mit einer anderen, gleichen benachbarten Platte weitere geradlinige Rohre (4') definiert, die die gleiche Neigung haben, wobei die Rohre einen hydraulischen Durchmesser, der im Bereich von 40 bis 100 mm liegt, und eine Länge, die im Bereich des 15- bis 30-fachen hydraulischen Durchmessers liegt, besitzen.

2. System nach Anspruch 1, **dadurch gekennzeichnet, dass** sich die Platten senkrecht zur kleinsten Abmessung des Blocks erstrecken.

3. System nach Anspruch 1 oder Anspruch 2, **dadurch gekennzeichnet, dass** die Welligkeitsprofile dieser benachbarten Platten derart sind, dass sie ein Dekantieren längs eines lokal dreieckigen Abschnitts ermöglichen.

4. System nach einem der Ansprüche 1 bis 3, **dadurch gekennzeichnet, dass** die Spitzen (2A, 3A) und die Täler (2B, 3B) eine trapezförmig sind, derart, dass die Dekantierungsrohre eine sechseckige Form haben.

5. System nach einem der Ansprüche 1 bis 4, **dadurch gekennzeichnet, dass** der Neigungswinkel (α) im Bereich von 45° bis 65° liegt.

6. System nach Anspruch 5, **dadurch gekennzeichnet, dass** der Neigungswinkel im Bereich von 55° bis 60° liegt.

7. System nach einem der Ansprüche 1 bis 6, **dadurch gekennzeichnet, dass** die Spitzen und die Täler gleiche Profile haben, derart, dass die Rohre, die durch diese Platte mit jeder der benachbarten Platten gebildet sind, den gleichen Querschnitt haben.

8. System nach einem der Ansprüche 1 bis 7, **dadurch gekennzeichnet, dass** es aus gleichen Platten gebildet ist, derart, dass jede Platte mit einer benachbarten Platte ein Paar benachbarter Platten definiert, die jeweils Welligkeiten aufweisen, deren Spitzen und Täler um den von null verschiedenen Winkel in Bezug auf den horizontalen Rand geneigt sind, wobei diese zwei benachbarten Platten dasselbe Welligkeitsprofil haben, derart, dass sie gemeinsam geradlinige und geneigte Dekantierungsrohre auf ihrer gesamten Länge begrenzen, indem sie aneinander in Verbindungszonen befestigt sind, die eine Symmetrieebene (P) für diese Rohre (4, 4'), die durch diese Platten definiert sind, definieren.

9. System nach Anspruch 8, **dadurch gekennzeichnet, dass** alle diese Rohre (4') den gleichen Querschnitt haben.

10. System nach einem der Ansprüche 1 bis 9, **dadurch gekennzeichnet, dass** dieser Block Einhakelemente aufweist, mittels derer dieser Block gehandhabt werden kann.

11. System nach Anspruch 10, **dadurch gekennzeichnet, dass** der Block an einem festen Teil des Systems aufgehängt ist.

12. System nach einem der Ansprüche 1 bis 9, **dadurch gekennzeichnet, dass** der Block auf einen festen Teil des Systems gestellt ist.

13. System nach einem der Ansprüche 1 bis 12, **dadurch gekennzeichnet, dass** es wenigstens zwei nebeneinander liegende, gleiche Blöcke umfasst, derart, dass sich Rohre eines der Blöcke in der Verlängerung der Rohre des Anderen der Blöcke befinden.

14. System nach einem der Ansprüche 1 bis 13, **dadurch gekennzeichnet, dass** der Block neben einer Behälterwand angeordnet ist, zu der die Platten senkrecht sind, wobei zwischen diesem Block und dieser Wand ein Zwischenraum bestehen bleibt.

## Claims

1. Lamellar sedimentation system including at least one rectangular parallelepipedal block (10) formed of a plurality of vertical rectangular plates fixed together and lying perpendicularly to one of the faces of this block, of which at least two identical adjacent plates (2, 3) that each have corrugations the crests (2A, 3A) and the troughs (2B, 3B) whereof are inclined at a non-zero angle (α) relative to a horizontal edge, these two adjacent crests having the same corrugated profile so as together to delimit inclined rectilinear sedimentation tubes (4, 4') over the whole of their length, being fixed together in connecting areas defining a plane relative to which the two plates are symmetrical to each other and which is a plane of symmetry (P) for these tubes (4) defined by these plates, one of these plates defining with another identical adjacent plate other rectilinear tubes (4') with the same inclination, the tubes having a hydraulic diameter from 40 mm to 100 mm and a length from 15 to 30 times their hydraulic diameter.

2. System according to claim 1, **characterised in that** the plates are perpendicular to the smallest dimension of the block.

3. System according to claim 1 or claim 2, **characterised in that** the corrugated profiles of these adjacent plates are such that they enable sedimentation along a locally triangular portion.

4. System according to any one of claims 1 to 3, **characterised in that** the crests (2A, 3A) and the troughs (2B, 3B) are of trapezoidal shape so that the sedimentation tubes are of hexagonal shape.

5. System according to any one of claims 1 to 4, **characterised in that** the angle of inclination (α) is in the range 45°-65°.

6. System according to claim 5, **characterised in that** the angle of inclination is in the range 55°-60°.

7. System according to any one of claims 1 to 6, **characterised in that** the crests and the troughs have identical profiles so that the tubes formed by said plate with each of said adjacent plates have the same section.

8. System according to any one of claims 1 to 7, **characterised in that** it is formed of identical plates such that each plate defines with an adjacent plate a pair of adjacent plates that each have corrugations the crests and the troughs whereof are inclined at said non-zero angle relative to said horizontal edge, these two adjacent plates having the same corrugated profile so as conjointly to delimit inclined rectilinear sedimentation tubes over the whole of their length, being fixed together in connecting areas defining a plane of symmetry (P) for these tubes (4, 4') defined by these plates.

9. System according to claim 8, **characterised in that** all these tubes (4') have the same section.

10. System according to any one of claims 1 to 9, **characterised in that** the block is provided with attachment members by means whereof this block may be handled.

11. System according to claim 10, **characterised in that** the block is suspended from a fixed portion of the system.

12. System according to any one of claims 1 to 9, **characterised in that** the block rests on a fixed portion of the system.

13. System according to any one of claims 1 to 12, **characterised in that** it includes at least two juxtaposed identical blocks so that the tubes of one of the blocks are in line with the tubes of the other block.

14. System according to any one of claims 1 to 13, **characterised in that** the block is disposed near a tank wall to which the plates are perpendicular, leaving a space between this block and this wall.
